# EUROPÄISCHE PATENTSCHRIFT

(11) **EP 1 031 731 B1**
(45) Veröffentlichungstag und Bekanntmachung des Hinweises auf die Patenterteilung: **07.06.2006**
(21) Anmeldenummer: 00103571.6
(22) Anmeldetag: 19.02.2000
(51) Int. Cl.: F15B 13/04

(54) **Wegesitzventil**
Multiway seat valve
Soupape à voies multiples à siège

(30) Priorität: 22.02.1999 DE 19907537; 26.02.1999 DE 19908440
(43) Veröffentlichungstag der Anmeldung: 30.08.2000
(73) Patentinhaber: HYDRAULIK-RING GMBH, 97828 Marktheidenfeld (DE)
(72) Erfinder: Zapf, Friedrich, 97753 Karlstadt (DE)

(56) Entgegenhaltungen:
- EP-A- 0 913 610
- DE-A- 2 124 484
- DE-A- 4 301 308
- DE-A- 4 311 347
- US-A- 4 610 267
- PATENT ABSTRACTS OF JAPAN vol. 1997, no. 03, 31. März 1997 (1997-03-31) & JP 08 296760 A (TOYOTA MOTOR CORP), 12. November 1996 (1996-11-12)

## Beschreibung

Die Erfindung betrifft ein Wegesitzventil nach dem Oberbegriff des Anspruches 1 sowie ein Verfahren zu dessen Montage gemäß Anspruch 12.

Derartige Wegesitzventile haben ein Ventilgehäuse mit einer Axialbohrung, in der ein Ventilkörper verschiebbar angeordnet ist. Der Ventilkörper wird mittels einer Druckfeder gegen einen Ventilsitz vorgespannt. Beim Überschreiten eines vorbestimmten Drucks am Eingangsanschluß wird der Ventilkörper von seinem Ventilsitz abgehoben und in eine Öffnungsstellung gebracht, in der der Eingangsanschluß mit einem Ausgangsanschluß, beispielsweise einem Arbeitsanschluß oder einem Tankanschluß, verbunden ist.

In der Druckschrift "Der Hydraulik Trainer", Band 1, Mannesmann Rexroth GmbH, 1991, Seite 203 ist ein Wegesitzventil beschrieben, bei dem einem Ventilkörper zwei Ventilsitze zugeordnet sind, so daß je nach Stellung des Ventilkörpers ein Eingangs- oder Druckanschluß mit einem Arbeitsanschluß oder der Arbeitsanschluß mit einem Tankanschluß verbindbar ist. Dieses Ventil ist mit einer negativen Überdeckung ausgeführt, so daß in einer Zwischenposition, in der der Ventilkörper weder an dem einen Ventilsitz noch an dem anderen Ventilsitz anliegt, alle drei Anschlüsse miteinander verbunden sind.

Insbesondere Wegesitzventile mit kleinerem Nenndurchmesser sind in der Regel direkt gesteuert und werden über eine mechanisch wirkende Vorrichtung, beispielsweise einen Elektromagneten, angesteuert, so daß der Ventilkörper in eine vorbestimmte Schaltstellung bringbar oder in dieser haltbar ist. Problematisch bei derartigen Wegesitzventilen ist, daß der Magnetarbeitspunkt des Elektromagneten relativ exakt auf die Axialposition des Ventilsitzes abgestimmt werden muß, so daß das Schalten des Elektromagneten auch spiel- und verzögerungsfrei auf den Ventilkörper wirkt. Das heißt die in der mechanischen Kette vom Elektromagneten zum Ventilkörper liegenden Bauelemente müssen hinsichtlich ihrer Toleranzen exakt auf den Magnetarbeitspunkt des Elektromagneten abgestimmt sein

Beim gattungsgemäßen Wegesitzventil (US-A-4 610 267), drückt ein Stößel eines Elektromagneten eine Ventilkugel gegen den Ventilsitz eines Formteiles. Eine zweite Ventilkugel ist einem zweiten Formteil vorgesehen und wird durch das Druckmedium gegen den Ventilsitz dieses zweiten Formteiles gedrückt. Zwischen beiden Ventilkugeln befindet sich ein Zwischenstift. Er sorgt dafür, daß die Ventilkugel des zweiten Formteiles vom Ventilsitz abhebt, wenn die andere Ventilkugel durch den Stößel des Elektromagneten gegen den Ventilsitz des ersten Formteiles gedrückt wird. Aufgrund der beiden Ventilkugeln und des zwischengeschalteten Stiftes hat das Wegesitzventil eine erhebliche Länge und ist zudem konstruktiv aufwendig ausgebildet. Da die Ventilkugeln durch den Stößel sowie den Zwischenstift direkt betätigt werden, kann der Magnetarbeitspunkt des Elektromagneten nicht exakt auf die Axialposition der Ventilsitze abgestimmt werden

Der Erfindung liegt die Aufgabe zugrunde, ein Wegesitzventil und ein Verfahren zur Montage eines Wegesitzventiles zu schaffen, bei denen der fertigungs- und montagetechnische Aufwand gegenüber den herkömmlichen Lösungen verringert ist.

Diese Aufgabe wird beim gattungsgemäßen Wegesitzventil erfindungsgemäß mit den kennzeichnenden Merkmalen des Anspruches 1 und beim Verfahren durch die Merkmale des Anspruches 12 gelöst.

Beim erfindungsgemäßen Wegesitzventil sind die Ventilsitze an beiden Formteilen vorgesehen, die mit Preßpassung in die Ventilbohrung des Ventilgehäuses eingesetzt werden. Die Einpreßtiefe der beiden Formteile richtet sich dabei nach dem tatsächlichen Magnetarbeitspunkt des verwendeten Elektromagneten, so daß ein optimales Ansprechen des Ventils auf ein Schalten des Elektromagneten gewährleistet ist. Die Einpreßtiefe läßt sich erfindungsgemäß durch geeignete Werkzeuge herstellen, die mit die Einpreßtiefe vorgebenden Anschlägen versehen sind, die beim Einsetzen der Formteile in Anlage an den Magnetanker-Stößel bringbar sind. Aufgrund der exakten Korrelation zwischen Magnetarbeitspunkt und Lage des Ventilsitzes ist keine Linearisierung eines zum Schalten des Wegesitzventiles verwendeten Elektromagneten erforderlich, so daß der Aufbau des erfindungsgemäßen Wegesitzventiles weiter verringert ist.

Die erfindungsgemäße Ausgestaltung des Ventilsitzes mit einem mit Preßpassung eingesetzten Formteil läßt sich besonders vorteilhaft bei sogenannten 1-Kugelventilen einsetzen, bei denen der Ventilkörper zwischen den beiden Ventilsitzen angeordnet ist, so daß je nach Ansteuerung drei Anschlüsse in vorbestimmter Weise miteinander verbindbar sind.

Die Ansteuerung des Ventilkörpers erfolgt vorzugsweise mittels eines Elektromagneten. Bei einem ganz besonders bevorzugten Ausführungsbeispiel wird der Ventilkörper über eine auf einen Stößel des Elektromagneten wirkende Druckfeder gegen einen Ventilsitz vorgespannt. Bei Betätigung des Elektromagneten wird der Stößel gegen die Kraft der Druckfeder vom Ventilkörper abgehoben, so daß dieser gegen den anderen Ventilsitz bewegt wird.

Die Herstellung und Montage des Formteiles ist besonders einfach, wenn dieses aus einem Metallblech tiefgezogen wird. Der Außendurchmesser des becherförmigen Formteiles ist dabei vorzugsweise mit Übermaß gegenüber der Ventilbohrung ausgelegt, so daß das Formteil mit Preßpassung einsetzbar ist.

Die Ausbildung des Ventilsitzes im Formteil ist besonders einfach, wenn im Boden des becherförmigen Formteils eine Ein- bzw. Auswölbung ausgebildet ist, die mit einem den Ventilsitz bildenden Durchbruch versehen ist.

Erfindungsgemäß wird dieser Ventilsitz durch Vorprägen mit einem Ventilkörper feinbearbeitet, der einen größeren Durchmesser als der tatsächlich verwendete Ventilkörper aufweist, so daß eine präzise Anlagefläche für den Ventilkörper gebildet ist.

Bei dem 1-Kugelventil wird der Ventilkörper vorzugsweise durch eine Führungshülse geführt, die zwischen den beiden eingepreßten Formteilen angeordnet ist und die eine radiale Auslenkung des Ventilkörpers verhindert. Auf diese Weise ist ein sicheres Verschließen des Ventilsitzes gewährleistet.

Die beiden Formteile sind bei dem 1-Kugelventil vorzugsweise derartig ausgebildet, daß sie sich von einer Seite her in das Ventilgehäuse einsetzen lassen und etwa die gleiche Lageorientierung, das heißt beispielsweise mit dem Boden zum Magneten hinweisend, aufweisen. Um das Ein- bzw. Ausströmen durch Radialanschlüsse des Ventilgehäuses zu erleichtern, sind die Formteile radial abgestuft, so daß eine Druckmittelströmung zum Ventilsitz hin erleichtert wird. Der Stößel des Elektromagneten wird vorzugsweise derart ausgebildet, daß er den ihm benachbarten Ventilsitz durchsetzt und den Ventilkörper in Richtung auf den anderen Ventilsitz vorspannt.

Das Ventilgehäuse läßt sich besonders kompakt ausbilden, wenn ein Spulenkörper des Elektromagneten zum Ventilteil hin radial erweitert ist, so daß ein Abschnitt des Ventilgehäuses in den radial erweiterten Abschnitt eintauchen kann.

Sonstige vorteilhafte Ausgestaltungen der Erfindung sind Gegenstand der weiteren Unteransprüche.

Im folgenden werden zwei Ausführungsbeispiele der Erfindung anhand schematischer Zeichnungen näher erläutert. Es zeigen:
- Fig. 1: einen Schnitt durch ein erfindungsgemäßes direktgesteuertes Wegesitzventil,
- Fig. 2: eine Detaildarstellung des Wegesitzventils aus Fig. 1,
- Fig. 3: eine Detaildarstellung eines Ventilsitzes des Wegeventils aus Fig. 1,
- Fig. 4: eine Darstellung eines Werkzeuges zum Justieren des Ventilsitzes,
- Fig. 5: eine zweite Ausführungsform eines erfindungsgemäßen direktgesteuerten Wegesitzventiles.

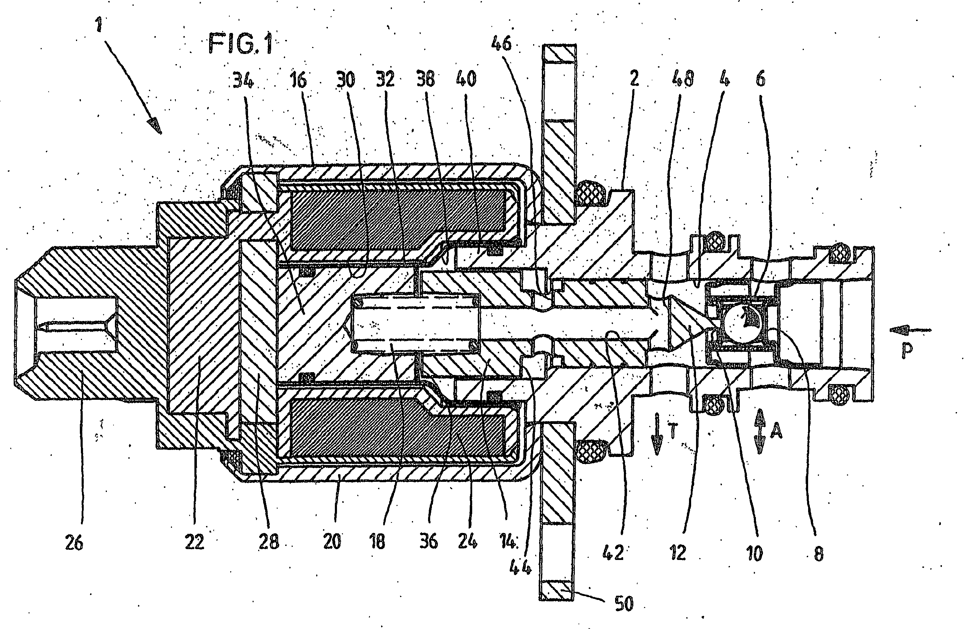

Fig. 1 zeigt einen Schnitt durch ein direktgesteuertes 3/2 Wegeventil 1. Dieses ist in Patronenbauweise ausgeführt und hat ein Ventilgehäuse 2 mit einer Ventilbohrung 4, in die ein Druckanschluß P, ein Arbeitsanschluß A und ein Tankanschluß T münden. Der Druckanschluß P mündet axial in die Ventilbohrung 4, während die beiden Anschlüsse A und T als Radialbohrungssterne ausgebildet sind. Das in Fig. 1 dargestellte 3/2 Wegeventil 1 ist als sogenanntes 1-Kugelventil ausgeführt und hat einen Ventilkörper 6, dem zwei Ventilsitze 8, 10 zugeordnet sind. Diese werden im folgenden noch näher beschrieben.

In der in Fig. 1 dargestellten Grundposition wird der Ventilkörper 6 durch einen Stößel 12 gegen den in Fig. 1 rechts dargestellten Ventilsitz 8 gedrückt. Dieser Stößel 12 ist einstückig mit einem Anker 14 eines Elektromagneten 16 ausgebildet und wird mittels einer Druckfeder 18 in seine Anlageposition gegen den Ventilkörper 6 vorgespannt.

Der im folgenden noch näher beschriebene Elektromagnet 16 ist als ziehender Magnet ausgeführt, so daß bei einer Bestromung des Elektromagneten 16 der Stößel 12 gegen die Spannung der Druckfeder 18 vom Ventilkörper 6 abgehoben werden kann.

Der Elektromagnet 16 hat ein tiefgezogenes Gehäuse 20, in dem ein Spulenkörper 22 mit einer Spule 24 aufgenommen ist.

Der Spulenkörper 22 hat an seinem in Fig. 1 linken Endabschnitt einen Stecker 26 zur Stromversorgung des Elektromagneten 1. In den Spulenkörper 22 ist eine Metallscheibe 28 eingespritzt.

Gemäß Fig. 1 hat der Spulenkörper 22 eine in seine rechte Stirnfläche mündende Axialausnehmung, in die ein Rohr 32 eingesetzt ist. Dieses Rohr 32 nimmt einen Polkern 34 auf, dessen eine Stirnseite an der Scheibe 28 anliegt und dessen andere Stirnseite mit einem Blättchen 36 aus magnetisch nicht leitendem Material versehen ist. Der Magnetkern 34 ist dichtend in das Rohr 32 eingesetzt. In dem in Fig. 1 rechten Endabschnitt des Polkerns 34 ist eine Axialsacklochbohrung ausgebildet, an deren innerer Stirnfläche die Druckfeder 18 abgestützt ist. Das Blättchen 36 hat entsprechend einen Durchbruch, der von der Druckfeder 18 durchsetzt wird.

Wie des weiteren aus Fig. 1 entnehmbar ist, sind das Rohr 32 und der Spulenkörper 22 etwa im Bereich des Blättchens 36 über eine Schrägschulter 38 radial erweitert. Dieser radial erweiterte Bereich des Spulenkörpers 22 und des Rohres 32 dient zur Aufnahme eines Fortsatzes 40, über den das Ventilgehäuse 2 mit dem Elektromagnet 16 oder genauer gesagt mit dem Spulenkörper 22 und dem Gehäuse 20 verbunden ist.

In der das Ventilgehäuse 2 durchsetzenden Axialbohrung 4 ist der Anker 14 geführt, dessen zum Polkern 34 weisender Endabschnitt radial erweitert ist. Der radial erweiterte Teil des Ankers 14 ist mit Spiel in der Axialbohrung 4 geführt. Der Anker 14 ist von einer Mittelbohrung 42 durchsetzt, die sich zur in Fig. 1 linken Stirnseite hin erweitert. An der durch die Erweiterung gebildeten Ringstirnfläche greift die Druckfeder 18 an.

Im Bereich des radial erweiterten Teils des Ankers 14 ist eine Ringnut 44 mit in der Mittelbohrung 42 mündenden Radialbohrungen 46 ausgebildet. Der Anker 14 ist an dem zu den Ventilsitzen 8, 10 weisenden Endabschnitt verjüngt, so daß der Stößel 12 ausgebildet wird, wobei in diesem verjüngten Bereich eine Querbohrung 48 ausgebildet ist, in der die Mittelbohrung 42 endet. Die Querbohrung 48 mündet etwa im Bereich des Tankanschlusses T in die Ventilbohrung.

Der Federraum zur Aufnahme der Druckfeder 18 und der von der Ringnut 44 und der benachbarten Umfangswandung des Ventilgehäuses 2 gebildete Raum sind über die Bohrungen 42, 46, 48 und den Tankanschluß T mit dem Tank verbunden, so daß sich in diesen Bereichen nur der vernachlässigbare Tankdruck aufbauen kann und andererseits eine Schmierung der beweglichen Teile des Elektromagneten 16 gewährleistet ist.

Anstelle der Bohrungen 42, 46, 48 können am Außenumfang des Ankers 14 auch Längsnuten ausgebildet werden, über die der Federraum mit dem Tankanschluß T verbindbar ist.

Die Befestigung des in Fig. 1 dargestellten Wegeventils 1 an einem Gehäuse erfolgt über einen Befestigungsflansch 50.

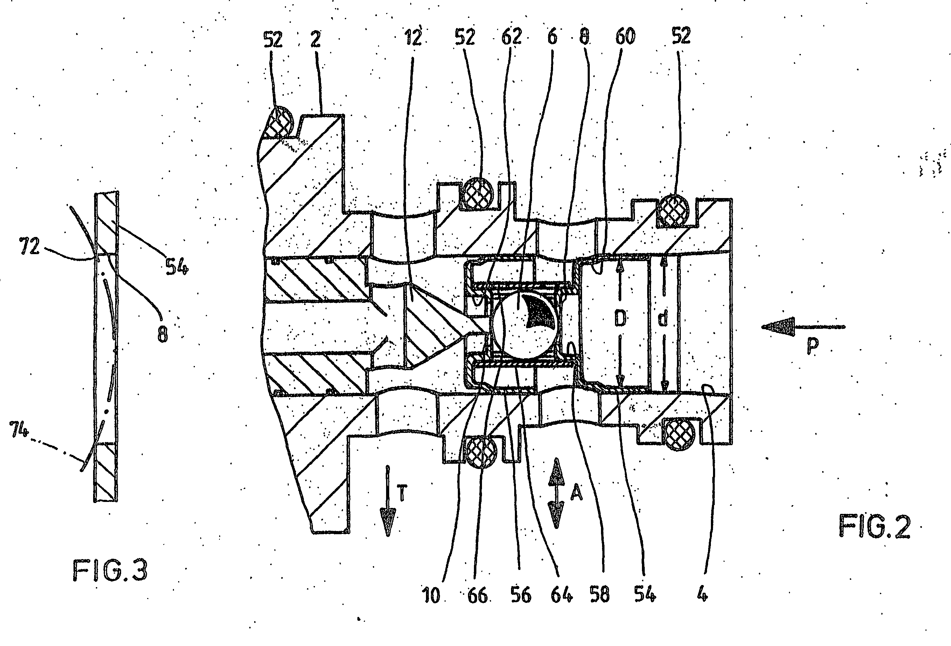

Der hydraulische Teil des elektromagnetisch betätigten Wegeventils 1 ist in Fig. 2 in vergrößertem Maßstab dargestellt. Zur Abdichtung der Anschlüsse P, A und T gegeneinander sind am Außenumfang des Ventilgehäuses 2 drei O-Ringe 52 angeordnet. Die beiden Ventilsitze 8, 10 für den kugelförmigen Ventilkörper 6 sind erfindungsgemäß durch zwei tiefgezogene Formteile ausgeführt, die in erster Näherung korbförmig ausgebildet sind. Der Ventilsitz 8 ist dabei an einem ersten Formteil 54 und der Ventilsitz 10 an einem zweiten Formteil 56 ausgebildet. Bei beiden Formteilen 54, 56 handelt es sich um tiefgezogene Blechteile, die einen etwa korbförmigen Aufbau haben. Der Außendurchmesser D der Formteile 54, 56 ist etwas größer als der Durchmesser d der Ventilbohrung 4 ausgeführt, so daß die Formteile 54, 56 mit Preßsitz in der Ventilbohrung 4 aufgenommen sind.

Prinzipiell könnten die Formteile aber auch auf andere Weise in der Ventilbohrung 4 befestigt werden.

Das in Fig. 2 rechts dargestellte erste Formteil 54 hat eine nabenförmige Auswölbung 58, in deren Boden der Ventilsitz 8 durch einen Axialdurchbruch ausgebildet ist. Wie aus Fig. 2 des weiteren hervorgeht, ist das erste Formteil 54 im Bereich des Arbeitsanschlusses A über eine Schrägwandung 60 verjüngt.

Die gekrümmte Schrägwandung 60 ist gemäß Fig. 2 so angeordnet, daß sie eine Strömung zwischen dem Arbeitsanschluß A und der Ventilbohrung 4 zu den Ventilsitzen hin ablenkt, so daß der Strömungswiderstand verringert ist. Des weiteren erleichtert die Schrägwandung 60 die Herstellung (Tiefziehen) und das Einsetzen der Formteile 54, 56.

Das zweite Formteil 56 hat im Prinzip den gleichen Aufbau wie das erste Formteil 54, wobei im Boden (linke Stirnfläche in Fig. 2) des Formteils 56 anstelle der Auswölbung 58 eine Einwölbung 62 ausgebildet ist. D.h., bei diesem Ausführungsbeispiel erstreckt sich der durch die Einwölbung 62 gebildete nabenförmige Vorsprung ins Innere des korbförmigen Formteils 56, während sich die Auswölbung 58 beim ersten Formteil 54 aus dem Boden heraus erstreckt.

Die Einwölbung 62 und die Auswölbung 58 haben den gleichen Außendurchmesser und tragen gemäß Fig. 2 eine Kunststoffhülse 64. D.h. die Kunststoffhülse 64 umgreift mit einem Endabschnitt die Einwölbung 62 und mit dem anderen Endabschnitt die Auswölbung 58. Durch die Kunststoffhülse 64 wird eine Axialführung für den Ventilkörper 6 gebildet, wobei dieser mit Spiel im Inneren der Kunststoffhülse 64 aufgenommen ist, so daß noch eine Umströmung des Ventilkörpers 6 möglich ist. Der Mantel der Kunststoffhülse 64 ist mit Durchbrüchen 66 versehen, so daß Druckmittel in das Innere der Kunststoffhülse 64 eintreten kann.

Durch die Kunststoffhülse 64 wird ein seitliches Auslenken des Ventilkörpers 6 verhindert, so daß eine Axialausrichtung mit Bezug zu den Ventilsitzen 8, 10 erfolgt. Ein derartiges radiales Auslenken des Ventilkörpers kann bei ungünstigen Betriebsbedingungen auftreten. Diese können beispielsweise dann auftreten, wenn am Anschluß P kein oder ein geringer Druck anliegt, so daß der Ventilkörper nicht durch Umströmung mit Druckmittel in seiner Radialposition festgehalten wird. Bei Fehlen der Kunststoffhülse 64 könnte eine Radialauslenkung des Ventilkörpers 6 auch bei Beschleunigungen senkrecht zur Ventilachse erfolgen.

Die Einpreßtiefe der beiden Formteile 54, 56 in die Ventilbohrung 4 erfolgt in Abhängigkeit von dem Magnetarbeitspunkt des Elektromagneten 16. D.h., im Rahmen einer Versuchsserie wird vor der Montage der erfindungsgemäßen Wegeventile 1 der Magnetarbeitspunkt oder Arbeitsbereich der Elektromagnete 16 bestimmt und in Abhängigkeit von diesem Bereich die Einpreßtiefe festgelegt. Durch die Maßnahme ist sichergestellt, daß der Elektromagnet 16 in seinem optimalen Arbeitsbereich angesteuert wird, so daß ein schnelles Ansprechverhalten des Ventils gewährleistet ist.

Aufgrund des geringen Hubs des Ankers 14 und der exakten Abstimmung der Lage der Ventilsitze 8, 10 zum Magnetarbeitsbereich ist keine Teillinearisierung der Kennlinie des Elektromagneten 16 erforderlich. Eine derartige Teillinearisierung wird beispielsweise durch eine Radialablenkung der Magnetfeldlinien erzielt, die wiederum das Auftreten von in Radialrichtung wirkenden Kräften bewirken. D.h., eine derartige Teillinearisierung erfordert zum einen einen komplexeren Aufbau des Elektromagneten und bewirkt zum anderen, daß in Radialrichtung wirkende Kräfte auf den Anker und den Ventilkörper wirken, die das Ansprechverhalten herkömmlicher Wegeventile gegenüber der vorliegenden Lösung ohne Teillinearisierung verschlechtern.

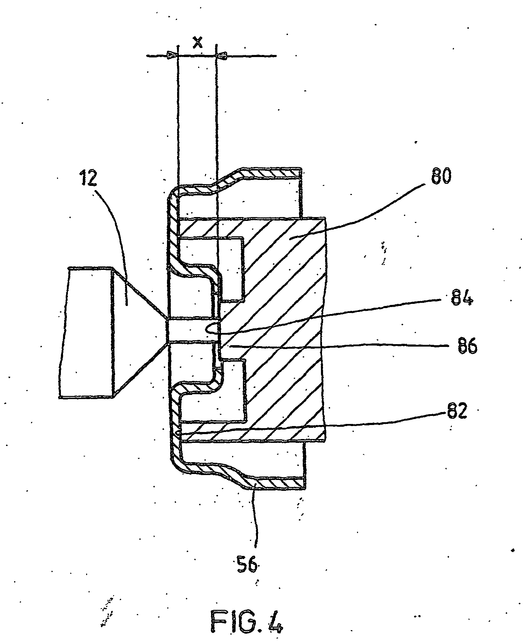

Gemäß Fig. 4 werden zum Einsetzen der beiden Formteile 54, 56 geeignete Werkzeuge 80 verwendet. Das Werkzeug 80 zum Einsetzen des stößelseitigen Formteils 56 hat an seiner Stirnfläche einen umlaufenden Ringbund 82, der in Anlage an die Innenstirnfläche des Formteils 56 bringbar ist. Die Einstellung der Einpreßtiefe erfolgt über eine Anlagefläche 84 eines mittigen Justierzapfens 86, die in Anlage an die Stirnfläche des Magnetanker-Stößels 12 bringbar ist. Der Axialabstand X der Stirnfläche des Ringbundes 82 von der Anlagefläche 84 bestimmt somit die Einpreßtiefe des Formteils 56. D.h., dieses wird mittels des Werkzeuges 80 so lange in die Axialbohrung 4 eingepreßt, bis die Anlagefläche 84 auf den Stößel 12 aufläuft. Auf diese Weise können Fertigungstoleranzen des Elektromagneten durch entsprechende Bearbeitung des Werkzeuges 80 auf einfache Weise ausgeglichen werden. Das Einsetzen des Formteils 54 erfolgt dann entweder in Abhängigkeit von der Axialposition des Formteils 56 oder aber über ein entsprechend der Darstellung 4 ausgebildetes Werkzeug wiederum in Abhängigkeit von der Lageposition des Magnetankers 12, wobei dann der Justierzapfen 86 axial über den Ringbund 82 vorsteht.

Bei der Montage wird zunächst das zweite Formteil 56 auf das zugeordnete Werkzeug 80 aufgesetzt und in die gewünschte Einpreßposition gebracht. Anschließend werden die Kunststoffhülse 64 und der Ventilkörper 6 eingesetzt und das zweite Formteil 54 mit dem weiteren Werkzeug 80 eingepreßt, wobei die Einpreßtiefe wiederum durch geeignete Ausgestaltung des Werkzeuges 80 vorgegeben ist.

Fig. 3 zeigt eine vergrößerte Darstellung des Ventilsitzes 8 des ersten Formteils 54. Demgemäß hat der Ventilsitz 8 eine Auflagefläche 72, die durch Anprägen mittels eines Prägekörpers 74 (strichpunktiert in Fig. 3), beispielsweise eines Ventilkörpers mit größerem Durchmesser als der Ventilkörper 6 des Wegeventils, hergestellt wird. Durch dieses Vorprägen wird die Rundheit des Ventilsitzes 8 (10) gewährleistet.

Bei unbestromter Spule 24 wird der Ventilkörper 6 über den Stößel 12, den Anker 14 und die Druckfeder 18 gegen den Ventilsitz 8 vorgespannt, so daß die Verbindung vom Druckanschluß P zum Arbeitsanschluß A unterbrochen ist. In dieser in den Fig. 1 und 2 dargestellten Position ist der Ventilkörper 6 vom Ventilsitz 10 abgehoben, so daß die Verbindung vom Arbeitsanschluß A zum Tankanschluß T geöffnet ist. Die Druckfeder 18 ist so ausgelegt, daß der Ventilkörper 6 bei Überschreiten eines Maximaldruckes abhebt, so daß eine Druckbegrenzungsfunktion zur Verfügung gestellt wird. Beim Abheben des Ventilkörpers 6 vom Ventilsitz 8 sind zunächst alle drei Anschlüsse P, T, A miteinander verbunden.

Bei Bestromung des Elektromagneten 16 wird ein Magnetfeld aufgebaut, das eine Axialbewegung des Ankers 14 in der Darstellung nach Fig. 1 nach links bewirkt. Die Feldlinien durchlaufen dabei das tiefgezogene Gehäuse 20, die Scheibe 28, den Polkern 34, den Spalt zwischen Polkern 34 und Magnetanker 14, den Magnetanker 14 selbst und den Fortsatz 40 des Ventilgehäuses 2.

Durch die Axialbewegung des Ankers 14 wird der Stößel 12 vom Ventilkörper 6 abgehoben, so daß dieser durch den Druck am Druckanschluß P gegen den Ventilsitz 10 gedrückt wird. Die Verbindung vom Arbeitsanschluß A zum Tankanschluß T wird zugesteuert, während die Verbindung vom Druckanschluß P zum Arbeitsanschluß A geöffnet wird. Das Druckmittel kann vom Arbeitsanschluß P durch den geöffneten Ventilsitz 8 und die Durchbrüche 66 in der Kunststoffhülse 64 zum Arbeitsanschluß A strömen. Der Verbraucher wird mit Druckmittel versorgt. Dieser Verbraucher kann beispielsweise ein Zylinder sein, über den ein automatisiertes Kraftfahrzeugschaltgetriebe betätigt wird.

Das Ventil ist mit negativer Überdeckung ausgeführt, so daß im Übergangsbereich alle drei Anschlüsse P, A und T miteinander verbunden sind.

Offenbart ist ein elektromagnetisch betätigtes Wegesitzventil, bei dem ein Ventilsitz durch ein korbförmiges Formteil ausgebildet ist, das in die Ventilbohrung eingesetzt wird.

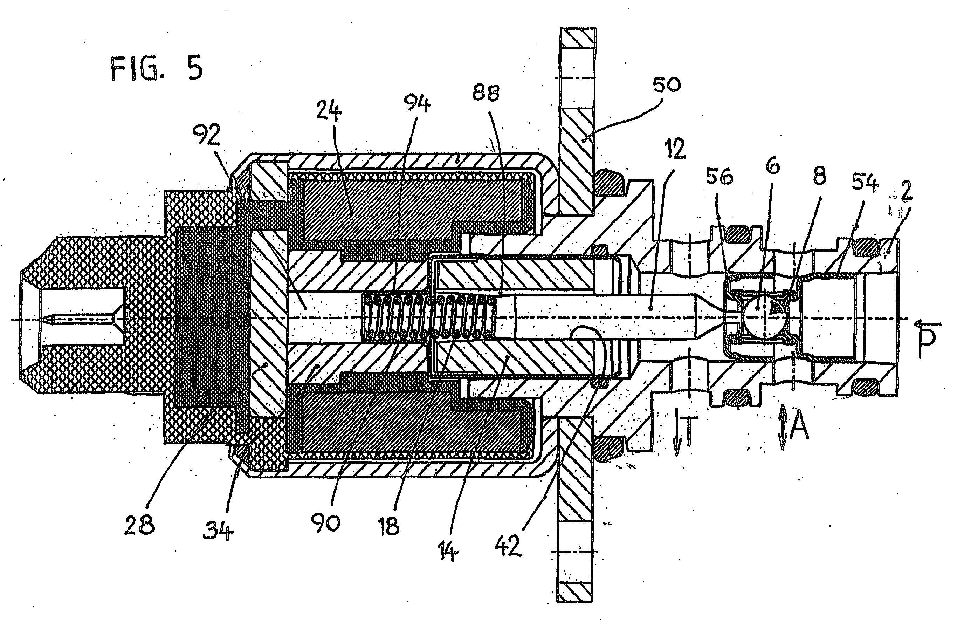

Das in Fig. 5 dargestellte Wegesitzventil unterscheidet sich vom vorigen Ausführungsbeispiel dadurch, daß der Anker 14 und der Stößel 12 nicht einstückig miteinander ausgebildet sind, sondern getrennte Bauteile sind. Der Anker 14 hat die Mittelbohrung 42, die ihn axial durchsetzt und in die der Stößel 12 eingepreßt ist. Die Wandung der Mittelbohrung 42 weist wenigstens eine Längsnut 88 auf, durch welche der Federraum 90, der die Druckfeder 18 aufnimmt, mit dem Tankanschluß T verbunden ist.

Da der Anker 14 und der Stößel 12 getrennte Bauteile sind, kann die Vorspannung der Druckfeder 18 durch Einpressen des Stößels 12 in eine kraftabhängige Position einfach und genau eingestellt werden.

Der Stößel 12 wird so weit in den Anker 14 eingepreßt, bis die Kraft der Druckfeder 18 beim Aufsetzen des Ankers 14 auf dem Anschlag eine vorgegebene Kraft erreicht hat. Dadurch ist die Einstelltoleranz für die Druckabsicherung sehr gering. Darüber hinaus wird eine Kosteneinsparung bei den Einzelteilen erzielt, da sowohl an der Buchse als auch am Anker 14 geringere Koaxialitätsforderungen benötigt werden.

Der Polkern 34 weist im Gegensatz zum vorigen Ausführungsbeispiel eine mittig ihn durchsetzende, axiale Bohrung 92 auf, in die das Rohr 32 mit einem zylindrischen Teil 94 ragt. Er ist napfförmig ausgebildet. Am Boden des zylindrischen Teils 94 stützt sich die Druckfeder 18 ab. Der Boden liegt mit Abstand von der Metallscheibe 28, an der der Polkern 34 anliegt.

Das Wegeventil ist im übrigen gleich ausgebildet wie die Ausführungsform nach den Fig. 1 bis 4.

## Patentansprüche

1. Wegesitzventil mit zwei Ventilsitzen (8, 10), die an Formteilen (54, 56) ausgebildet sind, die mit Preßsitz in eine Ventilbohrung (4) eingesetzt sind in der ein Ventilkörper (6) angeordnet ist, der zur Verbindungeines Arbeitsanschlusses (A) mit einem Tank- oder Druckanschluß (T, P) von einem Ventilsitz (8, 10) abhebbar ist,
**dadurch gekennzeichnet, daß** der Ventilkörper (6) zwischen den Formteilen (54, 56) liegt und als einziger Ventilkörper den beiden Ventilsitzen (8, 10) zugeordnet ist, und daß die Formteile (54, 56) so in die Ventilbohrung (4) eingesetzt sind, daß die jeweilige Einpreßtiefe der beiden Formteile (54, 56) und damit die Lage der Ventilsitze (8, 10) auf den Betriebsarbeitspunkt des Wegesitzventiles abgestimmt sind.

2. Wegesitzventil nach Anspruch 1,
**dadurch gekennzeichnet, daß** der Ventilkörpers (6) in Abhängigkeit von der Ansteuerung eines Elektromagneten (16) an den beiden Ventilsitzen (8, 10) in Anlage bringbar ist, um drei Anschlüsse (P, A, T) wahlweise miteinander zu verbinden.

3. Wegesitzventil nach Anspruch 1 oder 2,
**dadurch gekennzeichnet, daß** die Formteile (54, 56) aus einem korbförmig tiefgezogenen Metallblech, vorzugsweise aus Stahlblech, hergestellt sind.

4. Wegesitzventil nach Anspruch 3,
**dadurch gekennzeichnet, daß** jedes korbförmige Formteil (54, 56) am Boden eine Ein- bzw. Auswölbung (58, 62) hat, an der der jeweilige Ventilsitz (8, 10) ausgebildet ist.

5. Wegesitzventil nach einem der Ansprüche 1 bis 4,
**dadurch gekennzeichnet, daß** zwischen den beiden Formteilen (54, 56) eine mit Durchbrüchen (56) für das Druckmittel versehene Führungshülse (64) für den Ventilkörper (6) angeordnet ist.

6. Wegesitzventil nach Anspruch 5,
**dadurch gekennzeichnet, daß** die Endabschnitte der Führungshülse (64) auf der Ein- bzw. Auswölbung (58, 62) der Formteile (54, 56) abgestützt sind.

7. Wegesitzventil nach einem der Ansprüche 3 bis 6,
**dadurch gekennzeichnet, daß** die beiden den jeweiligen Ventilsitz (8, 10) ausbildenden korbförmigen Formteile (54, 56) in der gleichen Lageorientierung eingepreßt sind.

8. Wegesitzventil nach einem der Ansprüche 1 bis 7,
**dadurch gekennzeichnet, daß** die Formteile (54, 56) zu ihrem Boden hin über eine Schrägwandung (60) zurückgestuft sind.

9. Wegesitzventil nach einem der Ansprüche 2 bis 8,
**dadurch gekennzeichnet, daß** ein Stößel (12) des Elektromagneten mittels einer Druckfeder (18) in eine Anlageposition an den davon entfernten Ventilsitz (8) vorgespannt ist und dabei den anderen Ventilsitz (10) durchsetzt.

10. Wegesitzventil nach einem der Ansprüche 1 bis 9,
**dadurch gekennzeichnet, daß** der Ventilkörper (6) eine Kugel ist.

11. Wegesitzventil nach einem der Ansprüche 2 bis 10,
**dadurch gekennzeichnet, daß** ein Spulenkörper (22) des Elektormagneten (16) zum Ventilsitz (8, 10) hin erweitert ist und ein den Stößel (12) aufnehmender Teil des Ventilgehäuses (2) in den radial erweiterten Teil des Spulenkörpers (22) eintaucht.

12. Verfahren zur Montage eines elektromagnetisch betätigten Drei/Zwei-Wegesitzventiles (1) mit einem einzigen Ventilkörper (6), der wahlweise in Anlage an einen von zwei in einer Ventilbohrung (4) aufgenommenen Ventilsitzen (8, 10) bringbar ist, die jeweils an einem Formteil (54, 56) ausgebildet sind, mit den Schritten:
• Einpressen des ersten Formteiles (56) zur Ausbildung des ersten Ventilsitzes (10) mit einem Werkzeug (80), wobei die Einpreßtiefe in Abhängigkeit von der Lage des Magnetanker-Stößels (12) zur exakten Abstimmung der Lage des Ventilsitzes (10) zum Magnetarbeitsbereich gewählt wird, indem das Werkzeug (80) mit einem Justierzapfen (86) zur Anlage an die Stirnfläche des Magnetanker-Stößels (12) gebracht wird,
• Einlegen des Ventilkörpers (6) und
• Einpressen des zweiten Formteiles (54) zur Ausbildung des zweiten Ventilsitzes (8) mit einem weiteren Werkzeug (80), wobei die Einpreßtiefe wiederum in Abhängigkeit von der Lage des Magnetanker-Stößels (12) zur exakten Abstimmung der Lage des zweiten Ventilsitzes (8) zum Magnetarbeitsbereich gewählt wird.

13. Verfahren nach Anspruch 12,
**dadurch gekennzeichnet, daß** der Ventilsitz (8, 10) an jedem Formteil (54, 56) durch Prägen mit einem Prägekörper (74) feinbearbeitet wird.

## Claims

1. Combination transfer valve comprising two valve seats (8, 10) which are constructed on moulded parts (54, 56) which are inserted with a press fit into a valve bore (4) containing a valve body (6) which can be lifted from a valve seat (8, 10) to join a working connection (A) to a tank or pressure connection (T, P),
**characterised in that** the valve body (6) lies between the moulded parts (54, 56) and is associated with the two valve seats (8, 10) as a single valve body and that the moulded parts (54, 56) are inserted in the valve bore (4) so that the respective pressing-in depth of the two moulded parts (54, 56) and thus the position of the valve seat (8, 10) are matched to the operating working point of the combination transfer valve.

2. The combination transfer valve according to claim 1,
**characterised in that** the valve body (6) can be brought into abutment on the two valve seats (8, 10) depending on the control of an electromagnet (16) to join three connections (P, A, T) one to the other as desired.

3. The combination transfer valve according to claim 1 or 2,
**characterised in that** the moulded parts (54, 56) are made of a basket-shaped deep-drawn metal sheet, preferably of steel sheet.

4. The combination transfer valve according to claim 3,
**characterised in that** each basket-shaped moulded part (54, 56) has a convex or concave section (58, 62) at the bottom on which the respective valve seat (8, 10) is formed.

5. The combination transfer valve according to any one of claims 1 to 4,
**characterised in that** a guide sleeve (64) for the valve body (6) which is provided with openings (56) for the pressure means, is disposed between the two moulded parts (54, 56).

6. The combination transfer valve according to claim 5,
**characterised in that** the end sections of the guide sleeve (64) are supported on the convex or concave section (58, 62) of the moulded parts (54, 56).

7. The combination transfer valve according to any one of claims 3 to 6,
**characterised in that** the two basket-shaped moulded parts (54, 56) forming the respective valve seat (8, 10) are pressed in the same positional orientation.

8. The combination transfer valve according to any one of claims 1 to 7,
**characterised in that** the moulded parts (54, 56) are stepped back towards their base by means of a sloping wall (60).

9. The combination transfer valve according to any one of claims 2 to 8,
**characterised in that** a ram (12) of the electromagnet is pre-stressed by means of a compression spring (18) in a contact position on the valve seat (8) remote therefrom and thereby passes through the other valve seat (10).

10. The combination transfer valve according to any one of claims 1 to 9,
**characterised in that** the valve body (6) is a sphere.

11. The combination transfer valve according to any one of claims 2 to 10,
**characterised in that** a coil body (22) of the electromagnet (16) is extended towards to the valve seat (8, 10) and a portion of the valve housing (2) receiving the ram (12) dips into the radially extended portion of the coil body (22).

12. A method for mounting an electromagnetically actuated three/two-way combination transfer valve (1) comprising a single valve body (8) which can be brought into abutment as desired on one of two valve seats (8, 10) contained in a valve bore (4), each constructed on a moulded part (54, 56), comprising the steps:
- pressing in the first moulded part (56) to form the first valve seat (10) using a tool (80) wherein the pressing-in depth is selected as a function of the position of the magnetic armature ram (12) for exact matching of the position of the valve seat (10) to the working range of the magnet, by bringing the tool (8) to rest against the front face of the magnetic armature ram (12) by means of an adjusting pin (86),
- inserting the valve body (6) and
- pressing in the second moulded part (54) to form the second valve seat (8) using another tool (80), wherein the pressing-in depth is again selected as a function of the position of the magnetic armature ram (12) for exact matching of the position of the second valve seat (8) to the working range of the magnet.

13. The method according to claim 12,
**characterised in that** the valve seat (8, 10) on each moulded part (54, 56) is finish-machined by embossing using an embossing member (74).

## Revendications

1. Distributeur à clapet comportant deux sièges de soupape (8,10), qui sont réalisés sur des pièces moulées (54,56), qui sont insérées par fixation par pression dans un alésage de soupape (4), dans lequel un corps de soupape (6) est disposé, lequel peut être enlevé d'un siège de soupape (8,10) afin de relier un raccord de travail (A) avec un raccord de réservoir ou de pression (T,P),
**caractérisé en ce que** le corps de soupape (6) repose entre les pièces moulées (54,56) et est coordonné aux deux sièges de soupape (8,10) en tant que corps de soupape individuel et **en ce que** les pièces moulées (54,56) sont insérées dans l'alésage de soupape (4), de telle sorte que la profondeur d'enfoncement respective des deux pièces moulées (54,56) et donc la position des sièges de soupape (8,10) sur le point de travail en fonctionnement du distributeur à clapet soit synchronisée.

2. Distributeur à clapet selon la revendication 1,
**caractérisé en ce que** le corps de soupape (6) peut être amené en appui sur les deux sièges de soupape (8,10) en fonction du pilotage d'un électro-aimant (16), afin de relier facultativement les uns aux autres trois raccords (P,A,T).

3. Distributeur à clapet selon la revendication 1 ou 2,
**caractérisé en ce que** les pièces moulées (54,56) sont fabriquées dans une tôle métallique emboutie en forme de corbeille, de préférence une tôle d'acier.

4. Distributeur à clapet selon la revendication 3,
**caractérisé en ce que** chaque pièce moulée en forme de corbeille (54,56) possède à la base un renfoncement, respectivement renflement (58,62), sur lequel le siège de soupape respectif (8,10) est réalisé.

5. Distributeur à clapet selon une des revendications 1 à 4,
**caractérisé en ce que**, entre les deux pièces moulées (54,56), une douille de guidage (64) du corps de soupape (6), pourvue de percées (56) destinées au milieu de pressurisation est disposée.

6. Distributeur à clapet selon la revendication 5,
**caractérisé en ce que** les portions d'extrémité de la douille de guidage (64) s'appuient sur le renfoncement, respectivement renflement (58,62) des pièces moulées (54,56).

7. Distributeur à clapet selon une des revendications 3 à 6,
**caractérisé en ce que** les deux pièces moulées (54,56) en forme de corbeille formant le siège de soupape respectif (8,10) sont enfoncées dans la même orientation.

8. Distributeur à clapet selon une des revendications 1 à 7,
**caractérisé en ce que** les pièces moulées (54,56) sont placées en dégradé dans le sens de leur base par l'intermédiaire d'une paroi en biais(60).

9. Distributeur à clapet selon une des revendications 2 à 8,
**caractérisé en ce que** un poussoir (12) de l'électro-aimant est pré-tensionné au moyen d'un ressort de pression (18) en une position d'appui sur le siège de soupape qui en est éloigné et pénètre ainsi l'autre siège de soupape (10).

10. Distributeur à clapet selon une des revendications 1 à 9,
**caractérisé en ce que** le corps de soupape (6) est une bille.

11. Distributeur à clapet selon une des revendications 2 à 10,
**caractérisé en ce que** un corps de bobine (22) de l'électroaimant (16) s'élargit en allant vers le siège de soupape (8,10) et une partie du logement de soupape (2) renfermant le poussoir (12) plonge dans la partie radialement élargie du corps de bobine (22).

12. Procédé de montage d'un distributeur à clapet 2/2 ou 3/2 (1) actionné électromagnétiquement comportant un corps de soupape individuel (6), qui peut facultativement être amené en appui sur un des deux sièges de soupape (8,10) logés dans un alésage de soupape (4), lesquels sont respectivement réalisés sur une pièce moulée (54,56), comportant les étapes consistant à :
- Enfoncer la première pièce moulée (56) afin de former le premier siège de soupape (10) au moyen d'un outil (80), moyennant quoi la profondeur d'enfoncement est choisie en fonction de la position du poussoir d'armature d'aimant (12) afin de synchroniser exactement la position du siège de soupape (10) avec la zone de travail de l'aimant, en amenant l'outil (80) au moyen d'un tourillon d'ajustement (86) en appui sur la surface frontale du poussoir d'armature d'aimant (12),
- Poser le corps de soupape (6) et
- Enfoncer la deuxième pièce moulée (54) afin de former le deuxième siège de soupape (8) au moyen d'un autre outil (80), moyennant quoi la profondeur d'enfoncement est à nouveau choisie en fonction de la position du poussoir d'armature d'aimant (12) afin de synchroniser exactement la position du deuxième siège de soupape (8) avec la zone de travail de l'aimant.

13. Procédé selon la revendication 12,
**caractérisé en ce que** le siège de soupape (8,10) sur chaque pièce moulée (54,56) est fini par estampage au moyen d'un corps d'estampage (74).
